# EUROPEAN PATENT APPLICATION

(11) **EP 4 299 535 A1**
(43) Date of publication of application: **03.01.2024**
(21) Application number: 22847107.4
(22) Date of filing: 27.12.2022
(51) Int. Cl.: C02F 11/04, C02F 11/00, C02F 1/28, C05B 17/00, C02F 101/10

(54) **APPARATUS AND METHOD FOR ACCELERATING RELEASE AND RECYCLING OF ENDOGENOUS PHOSPHORUS FROM EUTROPHIC WATER BODY**

(30) Priority: 20.05.2022 CN 202210554452
(71) Applicant: Changjiang River Scientific Research Institute, Wuhan, Hubei 430000 (CN)
(72) Inventor: WANG, Zhenhua, Wuhan, Hubei 430000 (CN); HU, Yanping, Wuhan, Hubei 430000 (CN); TANG, Xianqiang, Wuhan, Hubei 430000 (CN); LIN, Li, Wuhan, Hubei 430000 (CN); LI, Qingyun, Wuhan, Hubei 430000 (CN); LONG, Meng, Wuhan, Hubei 430000 (CN); LI, Rui, Wuhan, Hubei 430000 (CN)
(74) Representative: Maiwald GmbH
(86) International application number: PCT/CN2022/142491
(87) International publication number: WO 2023/221518

(57) **Abstract**

The present disclosure provides devices and methods for accelerating release and recycling of endogenous phosphorus in eutrophic water body. The device includes an isolation cover, an adsorption isolation layer, and a stirring system. The isolation cover is disposed at a sediment-water interface. The adsorption isolation layer is disposed above the isolation cover, and the adsorption isolation layer is filled with a phosphorus adsorbing material. A bottom end of the isolation cover is inserted into a sediment to form a confined space with the adsorption isolation layer to generate an anaerobic environment for the release of phosphorus from the sediment. The stirring system is used for disturbing water body and a surface sediment in the confined space formed by the adsorption isolation layer and the isolation cover to accelerate the release of phosphorus from the sediment and adsorption of phosphorus into the water body.

## Description

### CROSS-REFERENCE TO RELATED APPLICATION

The present disclosure claims priority to and the benefit of Chinese Patent Application No. 202210554452.9, filed on May 20, 2022, the disclosure of which is incorporated herein by reference in its entirety.

### TECHNICAL FIELD

The present disclosure relates to the technical field of environmental governance, and in particular, to devices and metods for accelerating release and recycling of endogenous phosphorus in eutrophic water body.

### BACKGROUND

With the rapid development of industrial and agricultural production and urbanization, a large amount of nutrients discharged from production and life enter the natural water body along with runoff, resulting in eutrophication of lakes and reservoirs and accumulation of nutrients in sediment. Sediment in the lakes and reservoirs is not only the "sink" of nutrients, but also the "source" of nutrients. When factors such as dissolved oxygen, water temperature and pH value of overlying water above the sediment of the lakes and reservoirs change or the sediment is disturbed, the nutrients in the sediment can be released again and become an endogenous source of water pollution. As one of the nutrients in the sediment, phosphorus is not only a key factor in eutrophication of water body, but also an indispensable, irreplaceable and non-renewable strategic resource. Therefore, it is of great significance to reduce, restore and recycle phosphorus in the sediment of lakes and reservoirs, whether from the perspective of controlling eutrophication of water body or from the perspective of resource utilization.

At present, treatment of high-load endogenous phosphorus accumulated in eutrophic water body mainly includes ex-situ control technology and in-situ control technology. Ex-situ control technology refers to digging out the sediment from water body of the lakes and reservoirs, and then treating or recovering phosphorus in the sediment by means of leaching, electrokinetic remediation and the like. In-situ control technology refers to adding a layer of environment-friendly and pollution-free covering material, or spraying chemical agent and the like into the water body of the lakes and reservoirs, so as to inhibit the release of phosphorus in the sediment into the water body through physical, chemical and biological actions.

In the process of realizing the present disclosure, the inventors have found that the related art and device have the following disadvantages:
(1) The ex-situ control technologies such as dredging and leaching of the sediment are combined with electrokinetic remediation and the like can solve pollution problem caused by phosphorus in the sediment thoroughly, and some phosphorus can be recovered by leaching or electrokinetic remediation as well. However, this technology has a large amount of engineering work, a large disturbance to water body and a large accumulation of sediment, which increases the difficulty of its popularization and application.
(2) In-situ control technologies, such as covering the sediment, in-situ passivation, and the like, can reduce the release of phosphorus into the water body in a short period of time through the adsorption and passivation of the covering materials or reagents, but they can't realize reduction, restoration and resource recycling of phosphorus in high-load sediment.

### SUMMARY

In view of the above, the present disclosure provides a device and a method for accelerating the release and recycling of endogenous phosphorus in eutrophic water body. The device can accurately and in-situ seal and isolate the sediment of lakes and reservoirs polluted by local high-load phosphorus, so that the sediment-water interface within the isolation control range is in an anaerobic environment, thereby accelerating the release of phosphorus from the sediment to the isolated water body. After the phosphorus in the water body is adsorbed by an environmentally-friendly material, it can be used as a phosphate fertilizer for agricultural production together with the adsorbing material.

Technical solutions adopted by the present disclosure are as follows:
A device for accelerating release and recycling of endogenous phosphorus in eutrophic water body, which includes an isolation cover, an adsorption isolation layer, and a stirring system. The isolation cover is disposed at a sediment-water interface. The adsorption isolation layer is disposed above the isolation cover, the adsorption isolation layer is filled with a phosphorus adsorbing material, and a bottom end of the isolation cover is inserted into a sediment to form a confined space with the adsorption isolation layer, thereby creating an anaerobic environment for the release of phosphorus from the sediment. The stirring system is used for disturbing water body and a surface sediment in the confined space formed by the adsorption isolation layer layer and the isolation cover, so as to accelerate the release of phosphorus from a surface of the sediment and adsorption of phosphorus into the water body.

Optionally, the isolation cover comprises a cover cap, a cover body, and a cover edge, the cover body has a frame structure with upper and lower openings and a hollow interior, an edge of the upper opening of the cover body extends outward to form the cover edge for limiting a depth of the device inserting into the sediment, and the cover cap is disposed above the cover edge and connected with the cover body.

Optionally, the cover body has a circular ring structure, and the cover cap has a circular arc-top structure composed of a porous skeleton.

Optionally, the adsorption isolation layer comprises a waterproof cloth disposed at an upper layer of the porous skeleton, a water permeable cloth disposed at a lower layer of the porous skeleton, and the phosphorus adsorbing material filled between the waterproof cloth and the water permeable cloth.

Optionally, a top portion of the cover cap is provided with a fixing cover for fixing and sealing the waterproof cloth, which is internally sleeved with a sealing plug.

Optionally, the stirring system comprises a stirring blade disposed in the isolation cover, a bearing disposed at a top end of the isolation cover and embedded in the sealing plug, a telescopic rod connected with the stirring blade, and a power unit for driving the telescopic rod to rotate, and the telescopic rod is drivingly connected with the bearing.

Optionally, the power unit is a power blade exposed on a surface of the eutrophic water body, and the power blade is sheet-shaped, fan-shaped, or ball-shaped and is provided at an upper end of the telescopic rod, or the power unit is a motor drivingly connected with the telescopic rod.

Optionally, the cover edge is provided with a shackle, a top end of the telescopic rod is provided with a circular ring handle, and the shackle and the circular ring handle are used for connecting a hook in a mechanical arm.

Optionally, the phosphorus adsorbing material comprises one or more of zeolite, biochar and kaolin.

A method for accelerating release and recycling of endogenous phosphorus in eutrophic water body, which is carried out by adopting the above device, and the method includes the following steps:
(1) Determining the depth of overlying water above the sediment of lakes and reservoirs, adjusting the length of a mechanical arm with a hook on a ship or the shore to match the depth of water, hooking a shackle on the cover edge and a circular ring handle on the telescopic rod through the hook at a lower end of the mechanical arm, and then vertically putting the device into the water body.
(2) Slowly inserting the device into the sediment until it is obvious that the device cannot continue to be inserted, which means that the cover edge has been in contact with the sediment and the device has been inserted to a specified depth.
(3) Allowing the device to stand for 30 days to 40 days after it has been inserted into the sediment, so as to ensure that an anaerobic environment can be generated at the sediment-water interface in the confined space of the isolation cover, and the dissolved oxygen is reduced from 7-9 mg/L to less than 4 mg/L, thereby promoting continuous release of phosphorus from the sediment into a small amount of water body in the confined space. Meanwhile the phosphorus adsorbing material in the adsorption isolation layer can continuously enrich the phosphorus that has been released into the water.
(4) Installing a power blade on the telescopic rod after the anaerobic environment is generated in the confined space at the sediment-water interface, and rotating thw stirring blade by driving the power blade through wind, so as to disturb the water body and the surface sediment in the confined space, thus accelerating the release of phosphorus from the sediment and enrichment of phosphorus released into the water by the adsorption isolation layer.
(5) After the adsorption isolation layer is saturated with phosphorus, hooking the circular ring handle at the top end of the telescopic rod by using the mechanical arm on the ship or the shore to pull the device out, unscrewing the fixing cover, and pouring out the phosphorus adsorbing material, which can be used as a phosphate fertilizer for agricultural production.

The present disclosure can realize reduction, restoration and resource recycling of phosphorus in the sediment by adopting the above device and method.

### BRIEF DESCRIPTION OF THE DRAWINGS

FIG. 1 is front view of a device for accelerating release and recycling of endogenous phosphorus in eutrophic water body according to an embodiment of the present disclosure.
FIG. 2 is a perspective view of a device for accelerating release and recycling of endogenous phosphorus in eutrophic water body according to an embodiment of the present disclosure.
FIG. 3 is a top view of a device for accelerating release and recycling of endogenous phosphorus in eutrophic water body according to an embodiment of the present disclosure.
FIG. 4 is a cross-sectional view of a device for accelerating release and recycling of endogenous phosphorus in eutrophic water body according to an embodiment of the present disclosure.
FIG. 5 is an enlarged view of part B in FIG. 4.

### List of reference signs:

1: Isolation cover, 1-1: Cover cap, 1-2: Cover body, 1-3: Cover edge, 1-4: Porous skeleton, 1-5: Fixing cover, 1-6: Sealing plug, 1-7: Shackle, 2: Adsorption isolation layer, 2-1: Waterproof cloth, 2-2: Phosphorus adsorbing material, 2-3: Water permeable cloth, 3: Stirring system, 3-1: Circular ring handle, 3-2: Power blade, 3-3: Telescopic rod, 3-4: Bearing, 3-5: Stirring blade.

### DETAILED DESCRIPTION OF EMBODIMENTS

In order to make the objects, technical solutions, and advantages of embodiments of the present disclosure clearer, hereinafter, technical solutions in embodiments of the present disclosure will be clearly and completely described with reference to the accompanying drawings in embodiments of the present disclosure. Apparently, the described embodiments are part of, but not all of, the embodiments of the present disclosure. All other embodiments, obtained by a person with ordinary skill in the art on the basis of the embodiments in the present disclosure without expenditure of creative labor, belong to the protection scope of the present disclosure

In the present disclosure, the treatment of sediment polluted by local high-load phosphorus in a shallow lake having an area of 500 m² is taken as an example, wherein a device for accelerating release and recycling of endogenous phosphorus in eutrophic water body is used to carry out the recycling of phosphorus from the sediment. The device can accurately and in-situ seal and isolate the sediment polluted by local high-load phosphorus, so that the sediment-water interface within the isolation control range is in an anaerobic environment, thereby accelerating the release of phosphorus from the sediment to the isolated water body. After the phosphorus in the water body is adsorbed by an environmentally-friendly material, it can be used as a phosphate fertilizer for agricultural production together with the adsorbing material.

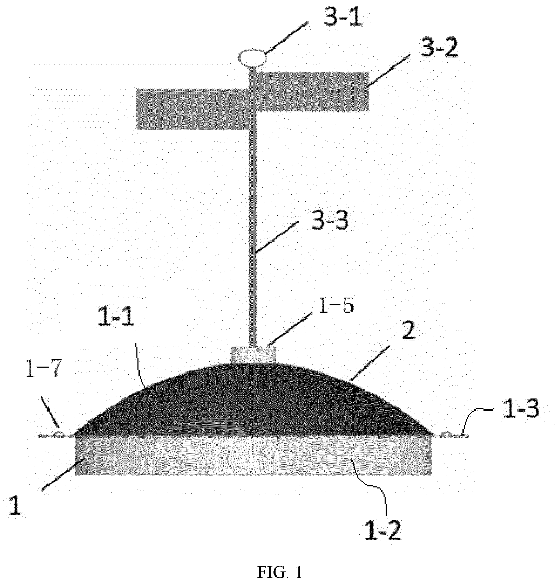

As shown in FIGs. 1-5, embodiments of the present disclosure provides device for accelerating release and recycling of endogenous phosphorus in eutrophic water body, which includes an isolation cover 1, an adsorption isolation layer 2, and a stirring system 3.

The isolation cover 1 has a configuration similar to a "hat" and includes a cover cap 1-1, a cover body 1-2, and a cover edge 1-3. The cover body 1-2 has a frame structure with upper and lower openings and a hollow interior, so that a confined space is formed by cover body 1-2 and the adsorption isolation layer atter the isolation cover is inserted into the sediment. The cover body 1-2 can be designed into a circular ring or a square shape. This embodiment takes a circular ring as an example, and the cover body 1-2 has a height of 15 cm.

An edge of an upper opening of the cover body 1-2 extends outward to form the cover edge 1-3, which is similar to an "edge of a hat". It has a a width of 30 cm, and is used to limit the depth of the device of the present disclosure inserted into the sediment. The cover cap 1-1 located above the cover body 1-2 is connected with the cover body 1-2. The cover cap 1-1 has a circular arc-top structure composed of a porous skeleton 1-4 with a diameter of 4 m and a height of 40 cm. Two criss-crossing steel bars can be disposed in the porous skeleton 1-4 as a support of the adsorption isolation layer 2 and a surport for pulling out the device.

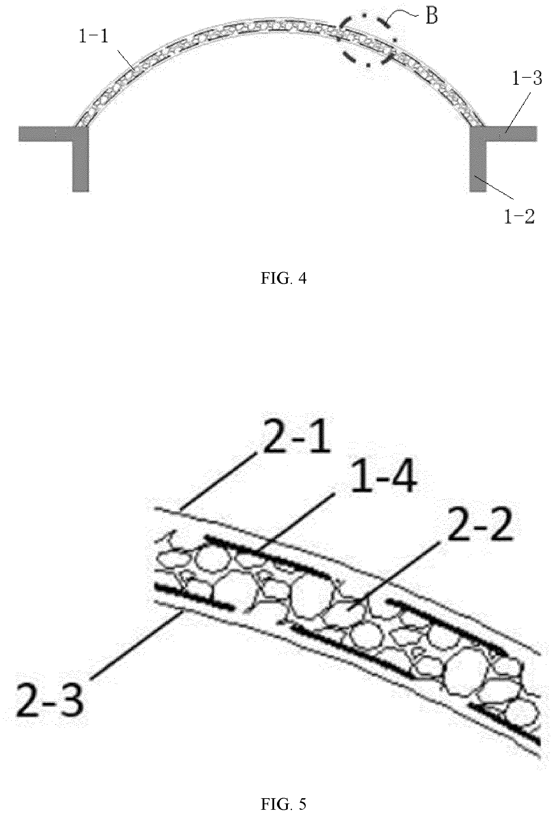

As shown in FIG. 5, the adsorption isolation layer 2 includes a waterproof cloth 2-1 disposed at an upper layer of the porous skeleton 1-4, a water permeable cloth 2-3 disposed at a lower layer of the porous skeleton 1-4, and the phosphorus adsorbing material 2-2 filled between the waterproof cloth 2-1 and the water permeable cloth 2-3. The adsorption isolation layer 2 is attached to the porous skeleton 1-4 to form a circular arc-top structure, which can improve the stability of the device.

A top portion of the cover cap 1-1 is provided with a fixing cover 1-5 for fixing and sealing the waterproof cloth 2-1. The fixing cover 1-5 is internally sleeved with a sealing plug 1-6. The cover edge 1-3 is provided with a shackle 1-7, which is used for connecting a mechanical arm with a hook.

The phosphorus adsorbing material 2-2 includes a material such as zeolite, biochar and kaolin, which can not only adsorb phosphorus, but also be recycled for agricultural production.

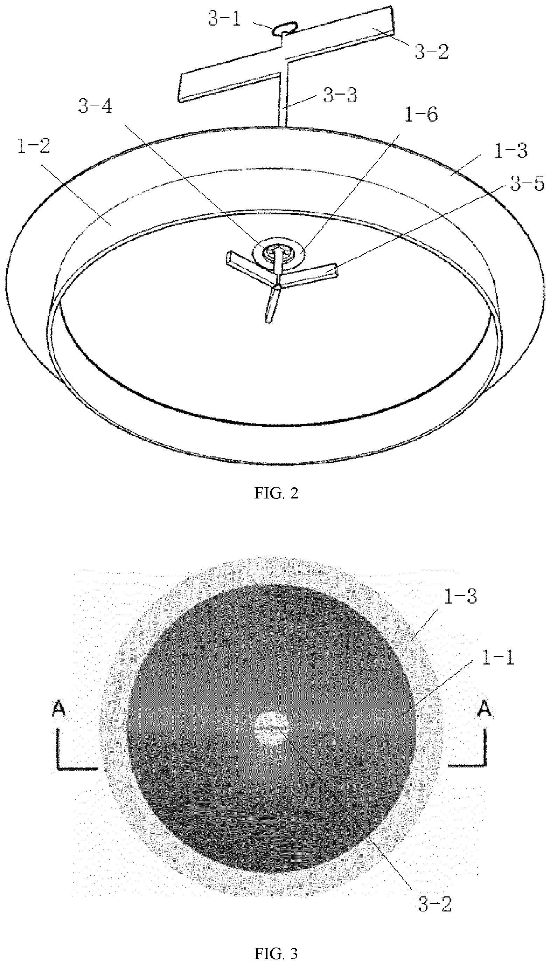

As shown in FIG. 2, the stirring system 3 includes stirring blades 3-5 (length: 0.5 m; width: 10 cm) disposed in the isolation cover, power blades 3-2 (length: 1 m; width: 20 cm) exposed on a surface of the water body, a bearing 3-4 disposed at a top end of the isolation cover 1 and embedded in the sealing plug 1-6, and a telescopic rod 3-3 connected with the stirring blades 3-5 and the power blades 3-2. The telescopic rod 3-3 is drivingly connected with the bearing 3-4, and a top end of the telescopic rod 3-3 is provided with a circular ring handle 3-1 for connecting the mechanical arm with a hook.

The power blade 3-2 is sheet-shaped, fan-shaped, or ball-shaped and is provided at an upper end of the telescopic rod.

The sealing plug 1-6 is wedge-shaped with a diameter of 5-10 cm. A lower part of the sealing plug 1-6 is pulled by a spring. When the mechanical arm hooks the circular ring handle 3-1 on the telescopic rod 3-3 and pulls it upwards, the telescopic rod 3-3 drives the bearing 3-4 to drive the sealing plug 1-6 to be exposed from the top of the isolation cover 1, so that water body in the isolation cover 1 can be discharged during the sinking process of the device, which is convenient for the device to be inserted into the sediment. When the device is inserted into a designated position, the mechanical arm is released, and the wedge-shaped sealing plug 1-6 can plug the fixing cover 1-5, so that the sediment and water in the isolation cover 1 are in a closed environment.

An assembly mode of the power blades 3-2 is as follows: when the wind force meets the preset conditions, the power blades 3-2 are assembled to provide stirring power through the wind force. When the wind force does not meet the preset conditions, the power blades 3-2 are disassembled, and a motor powered by solar energy is connected to provide stirring power to the telescopic rod 3-3.

In practice, 35 devices can be placed side by side in the sediment of lakes and reservoirs to be treated, which can meet the demand of large-scale restoration and treatment of phosphorus in the sediment having an area of 500 m² at one time.

Embodiments of the present disclosure further provide a method for accelerating release and recycling of endogenous phosphorus in eutrophic water body, which is carried out by adopting the above device, and the method includes the following steps:
(1) Determining the depth of overlying water above the sediment of lakes and reservoirs as 3 m, adjusting the length of a mechanical arm with a hook on a ship or the shore to match the depth of water, hooking a shackle 1-7 on the cover edge 1-3 and a circular ring handle 3-1 on the telescopic rod 3-3 through the hook at a lower end of the mechanical arm, and then vertically putting the device into the water body.
(2) Slowly inserting the device into the sediment until it is obvious that the device cannot continue to be inserted, which means that the cover edge 1-3 has been in contact with the sediment and the device has been inserted to a specified depth.
(3) Allowing the device to stand for 30 days after it has been inserted into the sediment, so as to ensure that an anaerobic environment can be generated at the sediment-water interface in the confined space of the isolation cover 1, and the dissolved oxygen is reduced from 7-9 mg/L to less than 4 mg/L. The results show that, when the environmental conditions are changed from aerobic to anaerobic, on the one hand, the phosphorus fixed by microorganisms in the sediment begins to be released, and on the other hand, the Fe³⁺ in the sediment is reduced to Fe²⁺ and becomes dissolved, which causes the iron-bound phosphorus to be activated and enter the water body. These two factors act together to promote continuous release of phosphorus from the sediment into a small amount of water body in the confined space. Meanwhile the phosphorus adsorbing material in the adsorption isolation layer can continuously enrich the phosphorus that has been released into the water.
(4) Connecting the telescopic rod 3-3 with a power unit after the anaerobic environment is generated at the sediment-water interface in the confined space, and rotating thw stirring blade 3-5 by driving the power blade 3-2 through the power unit, so as to disturb the water body and the surface sediment in the confined space, thus accelerating the release of phosphorus from the sediment and enrichment of phosphorus released into the water by the adsorption isolation layer.
(5) After the adsorption isolation layer 2 is saturated with phosphorus, hooking the circular ring handle 3-1 at the top end of the telescopic rod 3-3 by using the mechanical arm on the ship or the shore to pull the device out, unscrewing the fixing cover 1-5, and pouring out the phosphorus adsorbing material 2-2, which can be used as a phosphate fertilizer for agricultural production.

Some embodiments of the present disclosure are described above, but the scope of the present disclosure is not limited thereto. Any variations or substitutions readily conceivable by those skilled in the art within the technical scope of the present disclosure are intended to fall within the scope of the present disclosure. Accordingly, the scope of the present disclosure is defined by the appended claims.

## Claims

1. A device for accelerating release and recycling of endogenous phosphorus in eutrophic water body, comprising an isolation cover, an adsorption isolation layer, and a stirring system, wherein the isolation cover is disposed at a sediment-water interface; the adsorption isolation layer is disposed above the isolation cover and is filled with phosphorus adsorbing material, and a bottom end of the isolation cover is configured to, upon being inserted into a sediment, form a confined space with the adsorption isolation layer; and the stirring system is configured to disturb the water body and a surface sediment in the confined space.

2. The device according to claim 1, wherein the isolation cover comprises a cover cap, a cover body, and a cover edge; the cover body is of a frame structure with an upper opening, a lower opening and a hollow interior, and an edge of the upper opening extends outward to form the cover edge for limiting a depth of insertion of the device into the sediment; and the cover cap is disposed above the cover edge and connected with the cover body.

3. The device according to claim 2, wherein the cover body is of a circular ring structure, and the cover cap is of a circular arc top structure composed of a porous skeleton.

4. The device according to claim 3, wherein the adsorption isolation layer comprises a waterproof cloth disposed at an upper layer of the porous skeleton, a water permeable cloth disposed at a lower layer of the porous skeleton, and the phosphorus adsorbing material filled between the waterproof cloth and the water permeable cloth.

5. The device according to claim 4, wherein a top portion of the cover cap is provided with a fixing cover for fixing and sealing the waterproof cloth, and a sealing plug is sleeved inside the fixed cover.

6. The device according to claim 5, wherein the stirring system comprises a stirring blade disposed in the isolation cover, a bearing disposed at a top end of the isolation cover and embedded in the sealing plug, a telescopic rod connected with the stirring blade, and a power unit for driving the telescopic rod to rotate, and the telescopic rod is drivingly connected with the bearing.

7. The device according to claim 6, wherein the power unit is a power blade configured to be exposed on a surface of the eutrophic water body, and the power blade is sheet-shaped, fan-shaped, or ball-shaped and is disposed at an upper end of the telescopic rod.

8. The device according to claim 6, wherein the power unit is a motor drivingly connected with the telescopic rod.

9. The device according to claim 7 or 8, wherein a shackle is provided on the cover edge, a circular ring handle is provided at a top end of the telescopic rod, and the shackle and the circular ring handle are configured to connect a mechanical arm having a hook.

10. The device according to claim 1, wherein the phosphorus adsorbing material comprises one or more of zeolite, biochar and kaolin.
